# EUROPEAN PATENT SPECIFICATION

(11) **EP 1 837 703 B1**
(45) Date of publication and mention of the grant of the patent: **29.04.2009**
(21) Application number: 07251236.1
(22) Date of filing: 22.03.2007
(51) Int. Cl.: G03B 21/56, H04N 5/74

(54) **Rear projection display device and transmission screen**
Rückprojektionsanzeige und Übertragungsschirm
Dispositif d'affichage de projection arrière et écran de transmission

(30) Priority: 24.03.2006 JP 2006083546
(43) Date of publication of application: 26.09.2007
(73) Proprietor: Sony Corporation, Minato-ku Tokyo (JP)
(72) Inventor: Makida, Minoru, Tokyo (JP); Iwaki, Takaaki, Tokyo (JP)
(74) Representative: Smith, Samuel Leonard

(56) References cited:
- EP-A- 1 175 092
- JP-A- 11 015 080
- JP-A- 2001 042 426
- JP-A- 2005 316 025
- US-A1- 2004 240 055

## Description

### CROSS REFERENCES TO RELATED APPLICATIONS

The present invention contains subject matter related to Japanese Patent Application JP 2006-083546 filed with the Japanese Patent Office on March 24, 2006.

### BACKGROUND OF THE INVENTION

### 1. Field of the Invention

The present invention relates to a rear projection display device for displaying a video image by projecting the video image to a transmission screen from the rear side thereof, and relates also to such a transmission screen used in the rear projection display device.

### 2. Description of the Related Art

In general, a rear projection display device has a housing, a transmission screen provided on the front surface of the housing, and a video projector installed in the housing for projecting a video image to the transmission screen from the rear side thereof. The transmission screen used in the rear projection display device employs a lens sheet such as a lenticular lens sheet and a Fresnel lens sheet to obtain a desired image displaying performance.

Such a lens sheet has a low rigidity in itself and it is therefore demanded to use any means for maintaining a given flat shape. In general, the flat shape of the lens sheet is maintained by attaching the lens sheet to a molded resin plate or a glass plate as a rigid body.

However, in the case of using the molded resin plate, warpage occurs because of a difference in coefficient of linear expansion between the molded resin plate and the lens sheet. In the case of using the glass plate, the total weight of the screen is increased, so that a frame for supporting the screen is demanded to have a large rigidity. Accordingly, the material cost tends to become high. Further, the thickness of the frame is increased, causing limitations to design of the transmission screen.

US 2004/0240055 describes a lenticular lens plate at the front of a rear projection display apparatus, the lenticular lens plate including a front plate formed from a glass substrate and a lenticular sheet bonded to the glass. A Fresnel lens sheet is located behind the lenticular lens plate and, in one arrangement, the Fresnel lens sheet is held in tension. In particular, a resin substrate of the Fresnel lens sheet extends beyond the projection area and is bent over to form catch portions. A supporting frame includes corresponding elastic members with locking portions for engaging with the catch portions and resiliently biasing the catch portions in the plane of the Fresnel lens sheet so as to provide tension in the Fresnel lens sheet.

Japanese Patent No. 3341229 discloses a transmission screen such that the flat shape of a lens sheet can be maintained without using a molded resin plate or a glass plate. This transmission screen has a quadrilateral lens sheet and a pressure member (projection) provided near at least one of the two opposite sides of the lens sheet, wherein the pressure member is strongly pressed on the sheet surface of the lens sheet to thereby apply a tension to the lens sheet, thus maintaining the flat shape of the lens sheet.

### SUMMARY OF THE INVENTION

In this transmission screen, however, the lens sheet has a thickness of about 300 µm, so that the pressure member is pressed on the lens sheet by a considerably large pressure to obtain a demanded tension, and a complicated configuration is demanded to provide a mechanism for producing such a large pressure.

There is accordingly a need for the present invention to provide a transmission screen which can obtain a sufficient tension of a lens sheet with a simple configuration. There is another need for the present invention to provide a rear projection display device using such a transmission screen.

According to the present invention, there is provided a transmission screen as defined in appended claim 1 and a rear projection display device as defined in appended claim 7.

Preferably, the frame is formed with a groove extending along the pressure member so as to be opposed, the pressure member is pressed on the sheet surface of the subsheet in the condition where the subsheet is interposed between the groove and the pressure member, the subsheet comes into contact with an opening edge of the groove of the frame to form a contact surface at the opening edge, and a low-friction tape is attached to the contact surface to reduce the friction between the subsheet and the frame.

Preferably, the pressure member has a pressure applying portion pressed on the sheet surface of the lens sheet, the pressure applying portion having a substantially semicircular cross section, and the contact surface formed at the opening edge of the groove is roundedly chamfered.

Preferably, the elastic section includes a plurality of elastic sections uniformly spaced along the pressure member.

Preferably, the subsheet is formed of the same material as that of the main sheet and has a thickness smaller than the main sheet.

Preferably, the pressure member is arranged along at least one of the upper and lower sides of the lens sheet to provide a vertical tension to the lens sheet.

According to an embodiment of the present invention, the rod-shaped pressure member is arranged along at least one of the two opposite sides of the lens sheet and is pressed on the sheet surface of the lens sheet by the elastic section to apply a tension to the lens sheet. Accordingly, even when expansion and contraction due to changes in environment occur in the lens sheet, the expansion and contraction can be effectively absorbed, so that the occurrence of wrinkles and slack of the lens sheet can be reliably suppressed.

In particular, the pressed portion of the lens sheet pressed by the pressure member is provided by the subsheet having a small flexural rigidity. Accordingly, the applied pressure by the pressure member for providing a demanded tension to the lens sheet can be minimized, so that any complicated mechanism is not demanded and the cost can be suppressed with a simple configuration.

### BRIEF DESCRIPTION OF THE DRAWINGS

FIG. 1 is a perspective view showing the appearance of a rear projection display device according to a preferred embodiment of the present invention;
FIG. 2 is a side view showing the internal configuration of the rear projection display device shown in FIG. 1;
FIG. 3 is a front elevation showing a preferred embodiment of a mounting structure for a lenticular lens sheet in a transmission screen;
FIG. 4 is a vertical sectional side view of a major part of the mounting structure shown in FIG. 3;
FIG. 5 is a sectional view showing the structure of the lenticular lens sheet; and
FIG. 6 is a graph showing the relation between applied pressure by a pressure member and sheet tension produced in a lens sheet with the thickness of the lens sheet being varied.

### DETAILED DESCRIPTION OF THE PREFERRED EMBODIMENTS

Preferred embodiments of the present invention will now be described in detail with reference to the drawings.

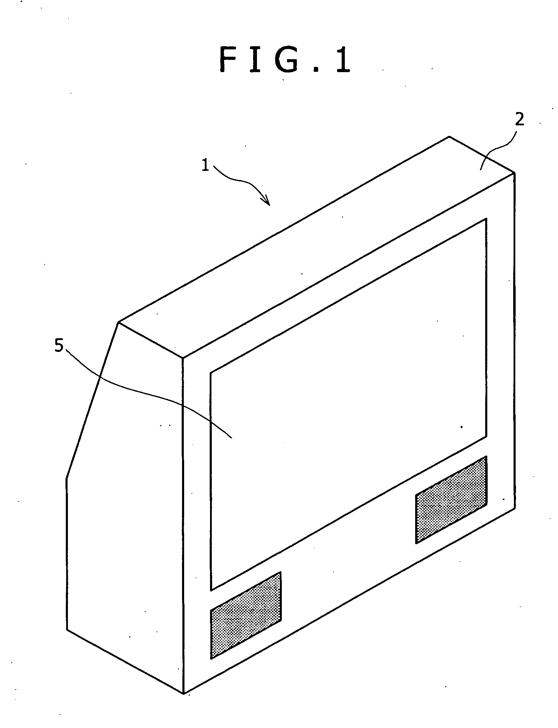

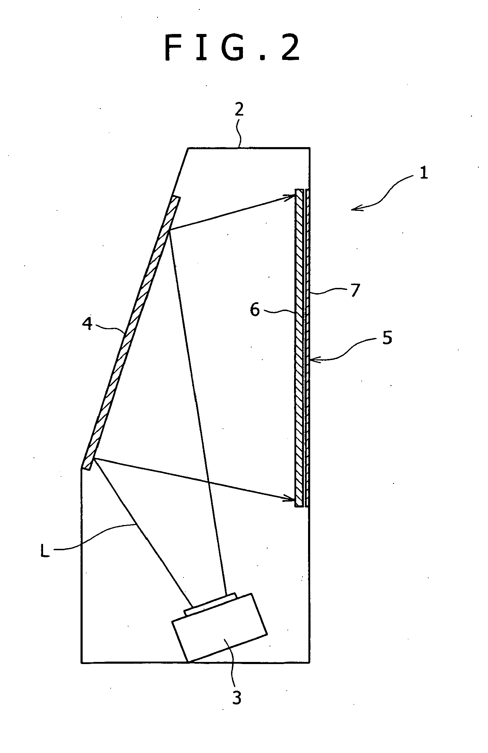

FIG. 1 is a perspective view showing the appearance of a rear projection display device 1 according to a preferred embodiment of the present invention, and FIG. 2 is a side view showing the internal configuration of the rear projection display device 1 shown in FIG. 1.

As shown in FIG. 1, the rear projection display device 1 has a housing 2 and a transmission screen 5 provided on the front surface of the housing 2. The transmission screen 5 displays a video image projected from the rear side of the transmission screen 5. As shown in FIG. 2, a video projector 3 is installed in the housing 2, and video image light L emerging from the video projector 3 is reflected by a reflecting mirror 4 to enter the transmission screen 5 from the rear side thereof.

The transmission screen 5 is composed of a Fresnel lens plate 6 for converging light and a lenticular lens sheet 7 juxtaposed to the Fresnel lens plate 6 for uniformly distributing the light over the screen to provide a contrast. The Fresnel lens plate 6 is composed of a base plate such as a molded resin plate or a glass plate and a Fresnel lens sheet attached to the base plate. The lenticular lens sheet 7 does not include a base plate as used in the Fresnel lens plate 6, but is arranged in the form of a sheet, thereby realizing a reduction in thickness and weight of the transmission screen 5.

The lenticular lens sheet 7 is demanded to maintain a stable flat shape, so as to ensure a good video displaying performance of the transmission screen 5. To meet this demand, the transmission screen 5 according to this preferred embodiment has the following configuration.

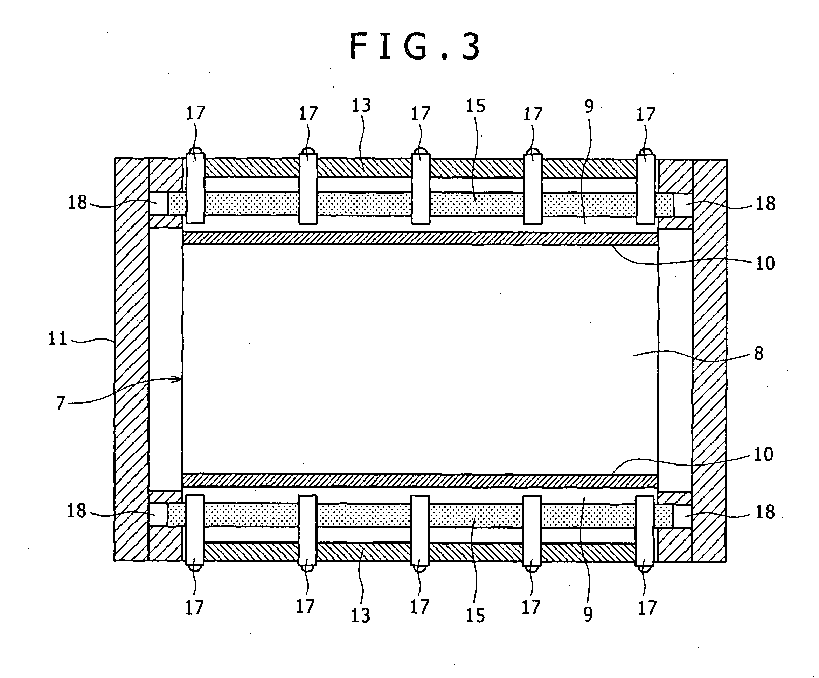

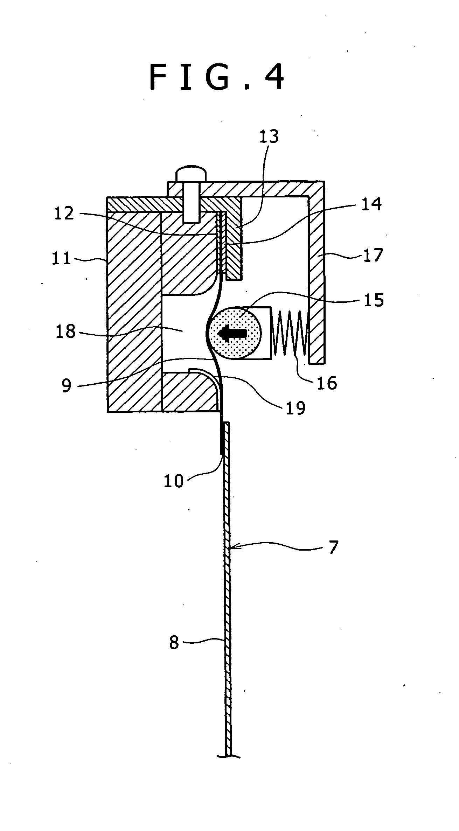

FIG. 3 is a front elevation of a mounting structure for the lenticular lens sheet 7, and FIG. 4 is a vertical sectional side view of a major part of the mounting structure shown in FIG. 3. As shown in FIG. 3, the lenticular lens sheet 7 has a horizontally elongated quadrilateral shape, and it is mounted to a rigid frame 11 of aluminum or the like in a stretched condition. The lenticular lens sheet 7 is composed of a main sheet 8 to which a video image is projected and a pair of upper and lower subsheets 9 respectively continuously joined to the upper and lower end portions of the main sheet 8.

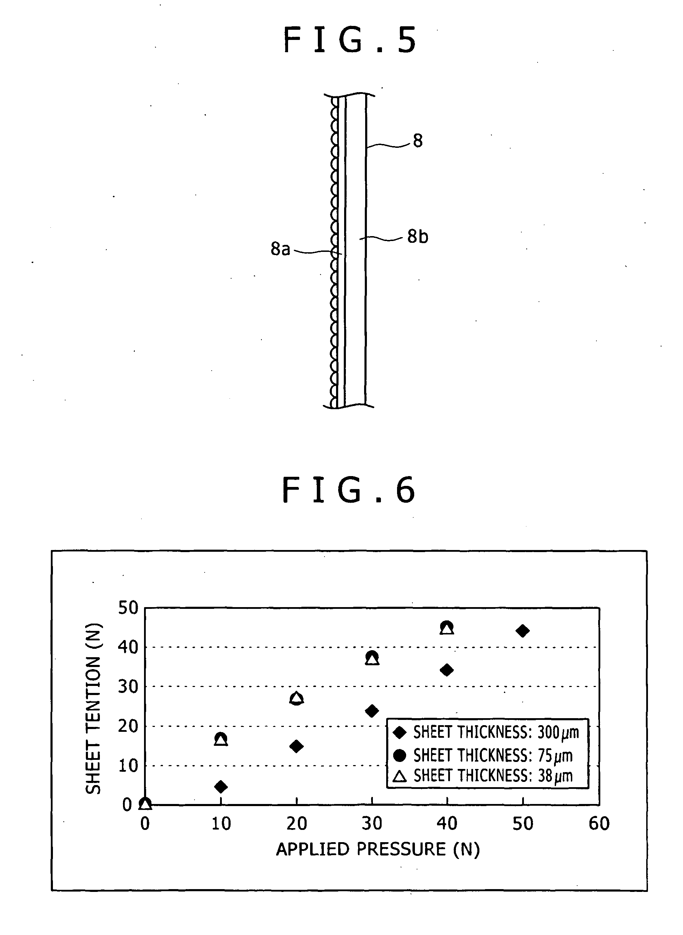

As shown in FIG. 5, the main sheet 8 of the lenticular lens sheet 7 is composed of a lens film 8a and a base film 8b attached to each other, and the total thickness of the main sheet 8 is about 300 µm. The main sheet 8 is formed of a material resistant to deformation and distortion due to changes in environment. For example, the main sheet 8 is preferably formed from a PET film.

On the other hand, each subsheet 9 is a sheet having a flexural rigidity smaller than that of the main sheet 8. The upper and lower subsheets 9 are respectively connected to the upper and lower end portions of the main sheet 8 by means of a pair of adhesive tapes 10 in an overlapping manner. In this preferred embodiment, each subsheet 9 is formed of the same material as that of the main sheet 8 and has a thickness smaller than that of the main sheet 8. More specifically, each subsheet 9 is formed from a PET film having a thickness of about 38 to 75 µm. As shown in FIG. 4, each subsheet 9 is fixed at an end portion thereof to the frame 11 by means of an adhesive tape 12, and this fixed end portion of each subsheet 9 is firmly held through a spacer 14 by a bracket 13 screwed to the frame 11.

As shown in FIG. 3, a pair of upper and lower rod-shaped pressure members 15 extend along the upper and lower opposite sides of the lenticular lens sheet 7. These pressure members 15 are pressed on the sheet surface (front surface) of the lenticular lens sheet 7 to thereby provide a vertical tension to the lenticular lens sheet 7.

Each pressure member 15 is a round rod having a circular cross section, which is formed of a rigid material such as aluminum. The upper and lower pressure members 15 are respectively pressed on the sheet surfaces of the upper and lower subsheets 9 in a direction perpendicular thereto by the elastic forces of a plurality of compression coil springs 16 as elastic section. These compression coil springs 16 are respectively held by a plurality of brackets 17 screwed to the frame 11. In this preferred embodiment, these brackets 17 are arranged along the upper and lower sides of the frame 11 at five equally spaced positions for each side in such a manner that these five positions are set in symmetrical relationship with respect to the horizontally central position. With this configuration, each pressure member 15 is pressed on the sheet surface of the corresponding subsheet 9 uniformly over the length of each pressure member 15 by the plural compression coil springs 16 arranged at uniform internals along each pressure member 15.

The frame 11 is formed with a pair of upper and lower grooves 18 respectively opposed to the upper and lower pressure members 15. As best shown in FIG. 4, each subsheet 9 is interposed between the corresponding groove 18 and the corresponding pressure member 15, wherein each pressure member 15 is pressed on the corresponding subsheet 9 so as to force it into the corresponding groove 18, thereby providing a vertical tension to the lenticular lens sheet 7. The opening edge of each groove 18 of the frame 11 is roundedly chamfered in R shape to form a contact surface for the corresponding subsheet 9. Further, a low-friction tape 19 for reducing the friction to the corresponding subsheet 9 is attached to the rounded contact surface formed at the opening edge of each groove 18, thereby ensuring the slidability in the case of expansion and contraction of the lenticular lens sheet 7. For example, a fluororesin film tape manufactured by Teraoka Seisakusho Co., Ltd. may be suitably used as the low-friction tape 19.

According to the transmission screen as mentioned above, the upper and lower rod-shaped pressure members 15 are arranged along the upper and lower sides of the lenticular lens sheet 7 and are pressed on the sheet surface of the lenticular lens sheet 7 by the compression coil springs 16 as elastic section, thereby providing a vertical tension to the lenticular lens sheet 7. Accordingly, even when expansion and contraction due to changes in environment such as temperature and humidity occur in the lenticular lens sheet 7, the expansion and contraction can be effectively absorbed by the compression coil springs 16, so that the occurrence of wrinkles and slack of the lenticular lens sheet 7 can be reliably suppressed.

Further, the direction of applying a tension to the lenticular lens sheet 7 by the pressure members 15 is the same as the direction of gravity, so that a tension can be efficiently applied to the lenticular lens sheet 7, thereby more reliably suppressing the occurrence of wrinkles and slack of the lenticular lens sheet 7.

As a result, the flat shape of the lenticular lens sheet 7 can be reliably maintained, so that a degradation in image quality such as image distortion and focusing degradation can be reliably prevented.

In particular, the pressed portion of the lenticular lens sheet 7 pressed by the pressure members 15 is provided by the upper and lower thin subsheets 9 each having a small flexural rigidity. Accordingly, a sufficient tension can be applied to the lenticular lens sheet 7 with a small pressure (load) applied by the pressure members 15.

FIG. 6 is a graph showing the measured results of the relation between applied pressure by a pressure member and sheet tension produced in a PET sheet with the thickness of the sheet being varied. As apparent from FIG. 6, in the case that the sheet thickness is 300 µm, the sheet does not start to be stretched unless the applied pressure by the pressure member is increased to some extent. Accordingly, an excess applied pressure becomes necessary to obtain a demanded tension. Further, the larger the sheet thickness, the larger the bending stress in the sheet, so that creep causing the deformation of the sheet is prone to occur.

To the contrary, in the case that the sheet thickness is 38 µm and 75 µm, a larger tension can be obtained by a smaller applied pressure as compared with the sheet having a thickness of 300 µm. Accordingly, no excess applied pressure is necessary to obtain a demanded tension. Further, the smaller the sheet thickness, the smaller the bending stress in the sheet, so that the creep is less prone to occur in the sheet.

According to this preferred embodiment, the applied pressure by the pressure members 15 for providing a sufficient tension to the lenticular lens sheet 7 can be minimized, so that any complicated mechanism is not demanded, but a lightweight frame not demanding a high rigidity is used to suppress the cost with a simple configuration.

Further, the subsheets 9 and main sheet 8 constituting the lenticular lens sheet 7 are formed of the same material, i.e., PET film. Accordingly, a difference in rate of expansion and contraction between the each subsheet 9 and main sheet 8 due to changes in environment such as temperature and humidity can be suppressed to thereby more reliably prevent the occurrence of wrinkles and slack of the lenticular lens sheet 7.

According to the transmission screen as mentioned above, a sufficient tension can be applied to the lenticular lens sheet 7 with a simple configuration, thereby reliably maintaining the flat shape of the lenticular lens sheet 7. As a result, a degradation in image quality such as image distortion and focusing degradation can be reliably prevented.

While the pressure members 15 are arranged along both the upper and lower sides of the lenticular lens sheet 7 to apply a vertical tension to the lenticular lens sheet 7 at its upper and lower end portions in this preferred embodiment, a single pressure member similar to each pressure member 15 may be arranged along any one of the upper and lower sides of the lenticular lens sheet 7 to apply a vertical tension to the lenticular lens sheet 7 at its only one vertical end portion.

As another modification, the pressure member or members 15 may be arranged along at least one of the right and left sides of the lenticular lens sheet 7 to apply a horizontal tension to the lenticular lens sheet 7.

It should be understood by those skilled in the art that various modifications, combinations, subcombinations and alterations may occur depending on design requirements and other factors insofar as they are within the scope of the appended claims.

## Claims

1. A transmission screen (5) adapted to be provided on the front surface of a rear projection display device (1), comprising:
a frame (11);
a quadrilateral lens sheet (7) having a sheet surface extending between two opposite sides and mounted to the frame (11) at the two opposite sides, the lens sheet (7) including a main sheet (8) to which the video image is projected, and a subsheet (9) continuously joined to an end portion of the main sheet (8) and fixed to the frame (11) so as to mount the lens sheet (7) to the frame (5) at one of the two opposite sides, the subsheet (9) having a flexural rigidity smaller than that of the main sheet (8);
a rod-shaped pressure member (15) arranged along the one of the two opposite sides of the lens sheet (7); and
an elastic section (16) configured to apply a pressure to the pressure member (15) to press the pressure member (15) on the sheet surface of the subsheet in a direction perpendicular thereto so as to provide a tension to the main sheet (8) between the two opposite sides.

2. The transmission screen according to claim 1,
wherein the frame (11) is formed with a groove (18) extending along the pressure member (15) so as to be opposed,
the pressure member (15) is pressed on the sheet surface of the subsheet (9) in the condition where the subsheet (9) is interposed between the groove (18) and the pressure member (15),
the subsheet (9) comes into contact with an opening edge of the groove (18) of the frame (11) to form a contact surface at the opening edge, and
a low-friction tape (19) is attached to the contact surface to reduce the friction between the subsheet (9) and the frame (11).

3. The transmission screen according to claim 2,
wherein the pressure member (15) has a pressure applying portion (15) pressed on the sheet surface of the lens sheet (9), the pressure applying portion (15) having a substantially semicircular cross section, and
the contact surface formed at the opening edge of the groove (18) is roundedly chamfered.

4. The transmission screen according to claim 1, 2 or 3 wherein the elastic section (16) comprises a plurality of elastic sections (16) uniformly spaced along the pressure member (15).

5. The transmission screen according to any one of claims 1 to 4, wherein the subsheet (9) is formed of the same material as that of the main sheet and has a thickness smaller than the main sheet (8).

6. The transmission screen according to any one of claims 1 to 5, wherein the pressure member (15) is arranged along at least one of the upper and lower sides of the lens sheet (7) to provide a vertical tension to the lens sheet (7).

7. A rear projection display device (1), comprising:
a housing (2);
a transmission screen (5) according to any preceding claim provided on the front surface of the housing (2); and
a video projector (3) installed in the housing (2)configured to project a video image to the transmission screen from the rear side.

## Patentansprüche

1. Übertragungsbildschirm (5), der angepasst ist, auf der Vorderfläche einer Rückprojektions-Anzeigeeinrichtung (1) vorgesehen zu werden, welcher umfasst:
einen Rahmen (11);
eine rechteckige Linsenplatte (7), welche eine Plattenfläche hat, die sich zwischen zwei gegenüberliegenden Seiten erstreckt und am Rahmen (11) an den beiden gegenüberliegenden Seiten befestigt ist, wobei die Linsenplatte (7) eine Hauptplatte (8) aufweist, auf welche das Videoabbild projiziert wird, und eine Hilfsplatte (9), welche fortlaufend mit einem Endbereich der Hauptplatte (8) verbunden ist und am Rahmen (11) fixiert ist, um somit die Linsenplatte (7) am Rahmen (5) an einer von den beiden gegenüberliegenden Seiten zu befestigen, wobei die Hilfsplatte (9) eine Biegefestigkeit hat, welche kleiner ist als die der Hauptplatte (8);
ein stabförmiges Druckteil (15), welches längs der einen von den beiden gegenüberliegenden Seiten der Linsenplatte (7) angeordnet ist; und
einen elastischen Abschnitt (16), der ausgebildet ist, einen Druck an das Druckteil (15) anzulegen, um das Druckteil (15) auf die Plattenfläche der Hilfsplatte in einer Richtung senkrecht dazu zu drücken, um somit eine Zugkraft für die Hauptplatte (8) zwischen den beiden gegenüberliegenden Seiten bereitzustellen.

2. Übertragungsbildschirm nach Anspruch 1,
wobei der Rahmen (11) mit einer Nut (18) ausgebildet ist, die sich längs des Druckteils (15) erstreckt, um somit gegenüberliegend zu sein,
das Druckteil (15) auf die Plattenfläche der Hilfsplatte (9) in dem Zustand gedrückt wird, wo die Hilfsplatte (9) zwischen der Nut (18) und dem Druckteil (15) angeordnet ist,
die Hilfsplatte (9) in Kontakt mit einem Öffnungsende der Nut (18) des Rahmens (11) kommt, um eine Kontaktfläche am Öffnungsende zu bilden, und
ein Band (19) niedriger Reibung an der Kontaktfläche angebracht ist, um die Reibung zwischen der Hilfsplatte (9) und dem Rahmen (11) zu reduzieren.

3. Übertragungsbildschirm nach Anspruch 2,
wobei das Druckteil (15) einen Druckaufbringungsbereich (15) hat, der auf die Plattenfläche der Linsenplatte (9) gedrückt wird, wobei der Druckaufbringungsbereich (15) einen im Wesentlichen halbkreisförmigen Querschnitt hat, und
die Kontaktfläche, welche am Öffnungsrand der Nut (18) gebildet ist, abgerundet abgeschrägt ist.

4. Übertragungsbildschirm nach Anspruch 1, 2 oder 3 wobei der elastische Abschnitt (16) mehrere elastische Abschnitte (16) umfasst, die längs des Druckteils (15) gleichmäßig beabstandet sind.

5. Übertragungsbildschirm nach einem der Ansprüche 1 bis 4, wobei die Hilfsplatte (9) aus dem gleichen Material wie das der Hauptplatte gebildet ist und eine Dicke hat, welche kleiner ist als die der Hauptplatte.

6. Übertragungsbildschirm nach einem der Ansprüche 1 bis 5, wobei das Druckteil (15) längs zumindest einer von der oberen und unteren Seite der Linsenplatte (7) angeordnet ist, um eine vertikale Zugkraft für die Linsenplatte (7) bereitzustellen.

7. Rückprojektions-Anzeigeeinrichtung (1), welche umfasst:
ein Gehäuse (2);
einen Übertragungsbildschirm (5) nach einem der vorhergehenden Ansprüche, der auf der vorderen Fläche des Gehäuses (2) vorgesehen ist; und
einen Videoprojektor (3), der im Gehäuse (2) installiert ist, der ausgebildet ist, ein Videoabbild auf den Übertragungsbildschirm von der Rückseite zu projizieren.

## Revendications

1. Écran à transmission (5) adapté à être monté sur la surface frontale d'un dispositif d'affichage à rétroprojection (1), comprenant :
un cadre (11) ;
une feuille-lentille (7) en forme de quadrilatère ayant une surface de feuille s'étendant entre deux côtés opposés et montée sur le cadre (11) aux deux côtés opposés, la feuille-lentille (7) incluant une feuille principale (8) sur laquelle est projetée une image vidéo, et une sous-feuille (9) jointe de façon continue à une portion terminale de la feuille principale (8) et fixée sur le cadre (11) de manière à monter la feuille-lentille (7) sur le cadre (5) à l'un des deux côtés opposés, la sous-feuille (9) possédant une rigidité vis-à-vis de la flexion plus faible que celle de la feuille principale (8) ;
un élément de pression en forme de barre (15) agencé le long d'un des deux côtés opposés de la feuille-lentille (7) ; et
une section élastique (16) configurée pour appliquer une pression à l'élément de pression (15) pour presser l'élément de pression (15) sur la surface de feuille de la sous-feuille dans une direction perpendiculaire à celle-ci de manière à appliquer une tension à la feuille principale (8) entre les deux côtés opposés.

2. Écran à transmission selon la revendication 1,
dans lequel le cadre (11) est formé avec une rainure (11) s'étendant le long de l'élément de pression (15) de manière à être opposé,
l'élément de pression (15) est pressé sur la surface de feuille de la sous-feuille (9) dans la condition dans laquelle la sous-feuille (9) est interposée entre la rainure (18) et l'élément de pression (15),
la sous-feuille (9) vient en contact avec un bord d'ouverture de la rainure (18) du cadre (11) pour former une surface de contact au bord d'ouverture, et
un ruban à faible friction (19) est attaché sur la surface de contact pour réduire la friction entre la sous-feuille (9) et le cadre (11).

3. Écran à transmission selon la revendication 2,
dans lequel l'élément de pression (15) possède une portion d'application de pression (15) pressée sur la surface de feuille de la feuille-lentille (9), la portion d'application de pression (15) ayant une section transversale sensiblement semi-circulaire, et
la surface de contact formée au niveau du bord d'ouverture de la rainure (18) est chanfreinée de manière arrondie.

4. Écran à transmission selon la revendication 1, 2 ou 3, dans lequel la section élastique (16) comprend une pluralité de sections élastiques (16) uniformément espacées le long de l'élément de pression (15).

5. Écran à transmission selon l'une quelconque des revendications 1 à 4, dans lequel la sous-feuille (9) est formée du même matériau que celui de la feuille principale et possède une épaisseur plus petite que celle de la feuille principale (8).

6. Écran à transmission selon l'une quelconque des revendications 1 à 5, dans lequel l'élément de pression (15) est agencé le long d'un côté au moins parmi le côté supérieur et le côté inférieur de la feuille-lentille (7) pour appliquer une tension verticale à la feuille-lentille (7).

7. Dispositif d'affichage à rétroprojection (1), comprenant :
un boîtier (2) ;
un écran à transmission (5) selon l'une quelconque des revendications précédentes, prévu sur la surface frontale du boîtier (2) ; et
un projecteur vidéo (3) installé dans le boîtier (2) et configuré pour projeter une image vidéo sur l'écran à transmission depuis le côté arrière.
